(19) Europäisches Patentamt
European Patent Office
Office européen des brevets

(11) **EP 2 700 985 B1**

## (12) FASCICULE DE BREVET EUROPEEN

(45) Date de publication et mention
de la délivrance du brevet:
**03.05.2017 Bulletin 2017/18**

(21) Numéro de dépôt: **13181074.9**

(22) Date de dépôt: **20.08.2013**

(51) Int Cl.:
***G02B 5/09*** *(2006.01)*  *G02B 27/01* *(2006.01)*

(54) **Viseur tête haute compact**

Kompakte Headup Visier

Compact head-up visor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.08.2012 FR 1257903**

(43) Date de publication de la demande:
**26.02.2014 Bulletin 2014/09**

(73) Titulaire: **COMMISSARIAT À L'ÉNERGIE ATOMIQUE ET AUX ÉNERGIES ALTERNATIVES**
**75015 Paris (FR)**

(72) Inventeur: **Rossini, Umberto**
**38500 COUBLEVIE (FR)**

(74) Mandataire: **Thibon, Laurent**
**Cabinet Beaumont**
**1, rue Champollion**
**38000 Grenoble (FR)**

(56) Documents cités:
**JP-A- 10 194 009   US-A- 5 087 116**
**US-A- 5 222 025   US-B1- 7 656 585**

**Description**

Domaine de l'invention

La présente invention concerne un viseur tête haute, encore appelé afficheur tête haute, collimateur tête haute ou système de visualisation tête haute. Plus particulièrement, la présente invention concerne un tel viseur présentant un encombrement réduit.

Exposé de l'art antérieur

Les viseurs tête haute, encore connus sous l'acronyme HUD, de l'anglais Head-Up Display, sont des systèmes d'affichage en réalité augmentée qui permettent de superposer une information visuelle sur une scène réelle vue par un observateur. En pratique, de tels systèmes peuvent être placés dans la visière d'un casque, dans le cockpit d'un avion ou au sein de l'habitacle d'un véhicule. Ils sont ainsi positionnés à faible distance des yeux de l'observateur, par exemple entre quelques centimètres et quelques dizaines de centimètres.

Ces dispositifs sont basés sur le même principe quelle que soit l'application visée. Une lame semi-transparente est placée entre l'oeil de l'observateur et une scène à observer. Dans le cas d'un HUD destiné à l'aviation, les objets de la scène à observer sont généralement situés à l'infini ou à une distance importante de l'observateur. Dans le cas d'un HUD destiné à être placé dans un véhicule, par exemple une voiture, les objets de la scène à observer sont généralement situés plus près de l'observateur, généralement à quelques mètres de celui-ci (devant le véhicule). Cela correspond notamment au cas où l'on cherche à afficher des informations supplémentaires sur le bas du pare-brise du véhicule. La lame semi-transparente est placée par rapport à la scène et à l'observateur de façon à transmettre les informations provenant de la scène à destination de l'observateur, sans altérer ces informations.

Un système de projection de l'information à afficher est en outre prévu, par exemple un écran. Ce système de projection est placé par rapport à la lame semi-transparente de façon que celle-ci combine les informations de la scène observée et les informations fournies par l'écran à destination de l'observateur. Ainsi, l'observateur visualise une superposition de l'image projetée et de la scène.

Dans le cas d'un HUD pour l'aviation, l'image projetée par l'écran doit être vue à l'infini par l'observateur pour lui éviter des problèmes d'accommodation. Pour cela, le système de projection peut comprendre un écran placé au point focal objet d'un système optique. Les rayons en sortie du système optique sont alors focalisés à l'infini.

Dans le cas d'un HUD destiné à être intégré dans un véhicule, le pare-brise joue souvent le rôle de lame semi-réfléchissante. Il est prévu pour être suffisamment réfléchissant côté observateur pour assurer la réflexion de l'information à destination de l'observateur, tout en restant transmissif aux informations provenant de la scène. En pratique, la formation d'un tel dispositif n'est pas aisée, la courbure du pare-brise devant être prise en compte pour dimensionner le HUD.

Un autre inconvénient des viseurs tête haute pour des véhicules est qu'ils sont généralement très consommateurs d'espace, et donc peu compatible avec des habitacles de volume réduit.

Un besoin existe donc d'un viseur tête haute présentant un encombrement réduit et assurant la formation, pour l'observateur, d'une image projetée à une distance de quelques mètres devant le véhicule.

On notera que, dans l'ensemble de cette description, la notion de véhicule sera comprise de façon large comme comprenant tout moyen de locomotion dans lequel un dispositif de réalité augmenté peut être intégré et pour lequel l'image vue par l'observateur doit être formée par ce dispositif à une distance de l'observateur comprise entre un mètre et quelques dizaines de mètres.

Résumé

Un objet d'un mode de réalisation de la présente invention est de prévoir un viseur tête haute compact adapté à l'intégration dans un véhicule.

Ainsi, un mode de réalisation de la présente invention prévoit un viseur tête haute, comprenant une source d'image et un miroir positionnés selon des plans principaux parallèles et séparés d'une première distance d, le miroir étant conformé pour former des images virtuelles des images fournies par la source d'image à une deuxième distance D du miroir, supérieure à la première distance.

Selon la présente invention, le miroir comprend des portions élémentaires de pas régulier ou non, l'angle $\mu$ de chaque portion élémentaire par rapport au plan principal du miroir, en fonction de la distance h entre la projection du centre de la portion sur le plan de la source d'image et le centre de la source d'image, étant défini par l'équation suivante :

$$\mu(h) = a\cos(\theta)^{f(G)}\left( \arctan\left( \frac{Gd}{h} \right) - \arctan\left( \frac{d}{h} \right) \right),$$

θ étant défini par θ = arctan(h/d), G étant le rapport entre la deuxième D et la première distance d, f (G) étant une valeur négative et non nulle, et a un paramètre constant.

Selon un mode de réalisation de la présente invention, la valeur f(G) est déterminée par une étape d'optimisation de tracé de rayons.

Selon un mode de réalisation de la présente invention, le miroir présente une épaisseur inférieure à 1 cm.

Selon un mode de réalisation de la présente invention, le miroir est constitué d'un empilement de deux couches de même indice séparées par une ligne brisée comprenant des portions inclinées dont la pente suit l'équation μ(h) reliées entre elles par des portions perpendiculaires au plan principal du miroir.

Selon un mode de réalisation de la présente invention, les portions inclinées de la ligne brisée sont métallisées.

Selon un mode de réalisation de la présente invention, la métallisation des portions inclinées de la ligne brisée est constituée d'un matériau dont le taux de transmission est supérieur ou égal à 70 %.

Selon un mode de réalisation de la présente invention, les deux couches de même indice sont recouvertes d'une couche antireflet.

Un mode de réalisation prévoit en outre une planche de bord d'un véhicule, comprenant un viseur tête haute tel que décrit ci-dessus.

Selon un mode de réalisation de la présente invention, la source d'image et le miroir sont escamotables dans la planche de bord.

Selon un mode de réalisation de la présente invention, la source d'image et le miroir sont montés sur des axes de façon à être repliés dans un renfoncement de la planche de bord.

## Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1 illustre schématiquement le principe d'un viseur tête haute selon un mode de réalisation ;
les figures 2 et 3 illustrent des moyens de détermination de la forme du système réfléchissant d'un viseur tête haute selon un mode de réalisation ;
la figure 4 illustre un mode de réalisation d'une structure réfléchissante d'un viseur tête haute selon un mode de réalisation ; et
la figure 5 illustre une intégration possible d'un viseur tête haute dans l'habitacle d'un véhicule.

Par souci de clarté, de mêmes éléments ont été désignés par de mêmes références aux différentes figures et, de plus, comme cela est habituel dans la représentation des systèmes optiques, les diverses figures ne sont pas tracées à l'échelle.

## Description détaillée

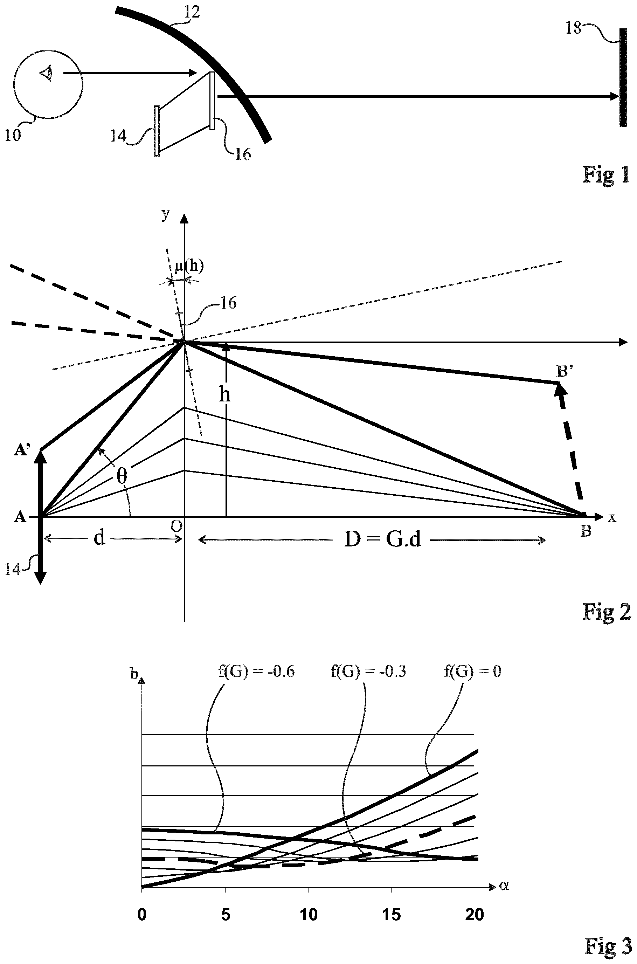

La figure 1 illustre le principe général d'un viseur tête haute adapté à une intégration dans un véhicule selon un mode de réalisation.

Un observateur 10 est placé à l'arrière d'un pare-brise 12, représenté schématiquement par un tronçon de courbe en figure 1. L'observateur est placé par rapport au pare-brise de façon qu'il voie l'extérieur de l'habitacle par l'intermédiaire du pare-brise, notamment horizontalement. Le dispositif de projection comprend, dans l'exemple représenté, un écran 14 positionné de façon à fournir des images en direction du pare-brise 12. En utilisation, l'écran 14 est placé verticalement. Un miroir 16 est placé, dans l'exemple représenté, selon une direction verticale (plan principal du miroir), sur le parcours de projection de l'écran 14. Le miroir 16 est positionné par rapport au pare-brise 12, par exemple en bas de celui-ci, de façon que l'observateur obtienne des informations en réalité augmentée en regardant en direction du miroir 16. L'écran 14 projette ainsi une information à destination du miroir 16 qui la renvoie vers l'observateur 10. Le miroir est prévu pour laisser passer une portion de l'information de la scène extérieure vers l'observateur.

Comme nous l'avons vu précédemment, l'espace alloué à l'intégration d'un viseur tête haute dans l'habitacle d'un véhicule est relativement réduit. Un inconvénient d'un dispositif comprenant un écran 14 couplé à un miroir 16 est que ce dispositif forme une image virtuelle, c'est-à-dire l'image vue par l'observateur 10, à une distance égale à celle séparant l'écran 14 et le miroir 16. Ainsi, en pratique, cette image se forme pour l'observateur dans un plan très proche.

Cela implique de faire un effort d'accommodation pour obtenir l'information projetée, vis-à-vis de la scène observée derrière le miroir. Un tel effort n'est pas désiré, l'accommodation prenant un temps non compatible avec la fourniture d'informations à destination d'un conducteur.

On prévoit ici d'utiliser un miroir 16 structuré de façon particulière pour que l'image virtuelle 18 qu'il projette soit vue par l'observateur 10 à une distance comprise entre un mètre et une dizaine de mètres, par exemple de l'ordre de 1,5 mètre. On prévoit en outre de former un miroir 16 relativement compact, c'est à dire présentant une épaisseur inférieure à 1 cm, de façon que ce miroir puisse par exemple être intégré dans un dispositif escamotable dans la planche de bord du véhicule.

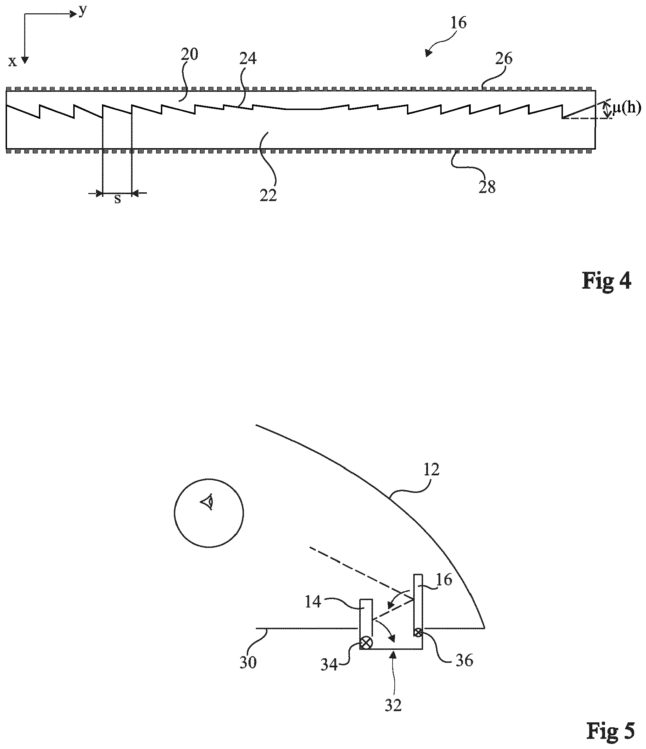

Les figures 2 et 3 illustrent des paramètres de conception d'un tel miroir 16, et la figure 4 illustre un exemple d'un tel miroir.

En figure 2 est représenté l'écran 14 qui est placé verticalement. On définit ici un axe x horizontal passant par le centre A de l'écran 14, une distance d qui sépare, horizontalement, l'écran 14 et la position moyenne du miroir 16 (plan principal du miroir), et une distance D qui sépare, toujours horizontalement, la position moyenne du miroir 16 et le plan dans lequel on désire que l'image virtuelle du miroir soit formée. On définit également un paramètre G tel que D = G.d. On définit un axe y, perpendiculaire à l'axe x passant par la position moyenne du miroir 16 (cet axe définit le plan principal du miroir). L'axe y est ainsi distant de l'écran 14 de la distance d. On appelle en outre h la hauteur séparant l'axe x d'un point considéré du miroir 16.

Pour qu'un faisceau lumineux partant du point A de l'écran 14 atteigne un point B sur l'axe x à une distance de l'axe y égale à D, en étant réfléchi par un point du miroir 16 situé à une distance h de l'axe x, le miroir 16 doit être incliné par rapport à l'axe y selon un angle appelé μ.

Dans ce cas simple, on détermine que l'angle p, en fonction de la distance h, doit être égal à :

$$\mu(h) = a\left(\arctan\left(\frac{Gd}{h}\right) - \arctan\left(\frac{d}{h}\right)\right), \qquad (1)$$

a étant un paramètre constant, par exemple de valeur égale à 0,5.

Cependant, un angle μ(h) tel que défini ci-dessus, bien qu'il convienne parfaitement pour un faisceau partant du point A, dégrade la résolution pour des points qui s'éloignent du centre. En effet, comme cela est représenté en figure 2, un faisceau lumineux partant d'un point A', excentré du centre de l'écran 14, forme une image B' légèrement floue à une distance de l'axe y inférieure à la distance D.

L'équation ci-dessus est donc adaptée aux faisceaux lumineux issus du centre de l'écran 14, mais dégrade la formation de l'image pour des faisceaux lumineux issus de la périphérie de l'écran 14, ce qui peut ne pas être désiré.

L'inventeur a donc cherché à améliorer la définition de l'angle μ(h) d'inclinaison du miroir à une distance h de l'axe x. Ses recherches, notamment réalisées à l'aide d'un logiciel de simulation de rayons lumineux connus sous l'appellation commerciale ZEMAX, l'ont amené à déterminer l'équation suivante :

$$\mu(h) = \frac{1}{2} a \cos(\theta)^{f(G)}\left(\arctan\left(\frac{Gd}{h}\right) - \arctan\left(\frac{d}{h}\right)\right), \qquad (2)$$

a étant un paramètre constant, par exemple de valeur égale à 0,5, l'angle θ étant l'angle formé au point A entre une direction rejoignant le point du miroir 16 à une distance h de l'axe x et l'axe horizontal x. En d'autres termes, l'angle θ vaut θ = arctan(h/d). Dans l'équation ci-dessus, le coefficient f (G) est une valeur négative qui dépend du paramètre G. Cette valeur peut être trouvée par l'homme de l'art en utilisant un logiciel de tracé de rayons tel que celui mentionné ci-dessus.

A titre d'exemple de valeurs numériques, si on considère une distance d de l'ordre de 200 mm, que l'on prend un paramètre G égal à 7 de façon que l'image virtuelle formée par le miroir soit placée à une distance sensiblement de 2 m de l'observateur (600 mm jusqu'au miroir environ plus la distance G.d), et que l'on prend un écran présentant des dimensions égales à 30 mm (de façon à former une image visible sous un angle de 6°), la valeur f(G) optimale vaut -0,3.

La figure 3 illustre des résultats d'un tracé de rayons permettant la détermination de cette valeur.

Cette figure simule des courbes de la taille de flou b d'une image formée dans le plan d'image virtuel du miroir (assimilé à un plan à la distance D de l'axe y) en fonction de la distance α du point source de cette image au centre de l'écran. Comme on peut le voir dans cette figure, pour une valeur f(G) nulle, c'est à dire dans le cas de l'équation (1), on voit que la taille de l'image formée par un point situé au centre de l'écran présente une taille nulle (un point forme un point). Cependant, pour un écart de 20 mm avec le centre de l'axe de l'écran, la taille de l'image formée est importante, ce qui implique que celle-ci est floue dans le plan image. Si on prend f(G) = - 0,6, l'effet inverse se produit : l'image formée par un point central de l'écran est relativement floue tandis que l'image formée par un point excentré de l'écran est de meilleure qualité (elle se rapproche d'un point).

Ainsi, en fonction du paramètre G désiré, une étape de tracé de rayons permet d'optimiser la formule (2) ci-dessus. Pour l'application numérique ci-dessus, une valeur de f(G) = -0,3 est un bon compromis. On obtient ainsi une image virtuelle dont la résolution est améliorée et sensiblement homogène (même taille de flou pour l'ensemble des faisceaux fournis par l'écran).

La figure 4 illustre la réalisation pratique d'un miroir selon un mode de réalisation. En figure 4, l'extérieur du véhicule est situé du côté de la partie basse du miroir 16 tandis que l'intérieur du véhicule est situé du côté de la partie haute du miroir 16.

Pour assurer la compacité du miroir, c'est-à-dire que celui-ci présente une épaisseur inférieure à 1 cm, on prévoit de scinder celui-ci en des portions élémentaires de pas réguliers de dimension s. A titre d'exemple de réalisation, le pas s peut être compris entre 0,1 et 0,5 mm, par exemple de l'ordre de 0,25 mm.

Le miroir 16 est constitué de deux régions de mêmes indices de réfraction 20 côté conducteur et 22 côté extérieur du véhicule, délimitées par une ligne brisée de séparation 24. La ligne brisée de séparation 24 comprend des premières portions inclinées par rapport au plan principal du miroir (plan d'extension de celui-ci) qui sont semi-réfléchissantes, reliées entre elles par des portions non réfléchissantes perpendiculaires au plan principal du miroir. La ligne brisée 24 présente, sur chacune des portions de pas s, un angle $\mu$ par rapport au plan principal du miroir défini à l'aide de l'équation ci-dessus, la distance h choisie pour la détermination de l'angle d'inclinaison de chacune des portions 24 étant la distance h moyenne de la portion de pas s. Chacune des portions définissant la ligne brisée 24 a une position moyenne selon l'axe x située à une même valeur (définissant le plan principal du miroir).

Du fait de la formation des régions semi-réfléchissantes formant la ligne brisée 24 selon un débattement relativement faible selon la direction x, le miroir 16 de la figure 4 est relativement compact. En outre, la définition des pentes des différentes portions semi-réfléchissantes assure une réflexion de bonne qualité, et la formation d'une image virtuelle de bonne qualité à une distance désirée (Gd) de l'observateur.

A titre d'exemple, les faces réfléchissantes inclinées de la ligne brisée 24 peuvent être, pour remplir cette fonction de semi-réflexion, recouvertes d'une métallisation en un matériau présentant un coefficient de transmission de l'ordre de 70 %, de préférence supérieur ou égal à 70 % pour correspondre au minimum toléré par les normes automobiles sur un pare-brise. A titre d'exemple, cette métallisation pourra être de l'aluminium ou de l'argent qui présentent de bons compromis taux de réflexion/taux d'absorption. Ainsi, l'observateur qui reçoit l'information fournie par l'écran 14 et réfléchie par le miroir 16 reçoit également une information de l'environnement situé en arrière de ce miroir. Cela permet de définir un miroir dans l'habitacle du véhicule qui empiète sur le champ de vision du conducteur, tout en ne perturbant pas sa vision de l'environnement extérieur. En effet, avec une structure de celle du type de celle de la figure 4, la lumière réfléchie fournit une image agrandie renvoyée à un angle plus grand que l'angle d'incidence, tandis que la lumière transmise ne subie aucune déformation. Cette lumière transmise est seulement atténuée du fait de la présence de la couche semi-réfléchissante. Ainsi, l'image de l'écran, réfléchie par le miroir semi-réfléchissant, est agrandie et déportée, tandis que la lumière provenant de l'environnement extérieur traverse le miroir sans déformation.

On notera que les dimensions générales du miroir sont directement liées au débattement autorisé de la tête du conducteur (pour que l'information projetée soit vue par celui-ci). Plus le miroir sera grand, plus le conducteur aura le loisir de se déplacer et de percevoir l'image réfléchie de l'écran.

A titre de variante, une couche antireflet 26 peut être formée sur la face du miroir 16 située côté conducteur (face supérieure en figure 4). Une couche antireflet 28 peut également être formée sur la face opposée du miroir 16 (face inférieure en figure 4).

La figure 5 illustre schématiquement un mode de réalisation d'intégration du dispositif proposé ci-dessus dans l'habitacle d'un véhicule.

Dans cet exemple de réalisation, le pare-brise 12 ainsi qu'une planche de bord 30 de l'habitacle d'un véhicule sont représentés. Un renfoncement 32 est formé dans la planche de bord 30.

Un axe de rotation 34 est formé au fond de ce renfoncement, du côté du conducteur, l'écran 14 étant monté en rotation sur cet axe. Ainsi, l'écran 14 peut se replier dans le fond du renfoncement. Un autre axe de rotation 36, parallèle à l'axe 34, est formé dans le fond du renfoncement, à l'opposé du premier axe de rotation. Le miroir 16 est monté en rotation sur l'axe 36 pour permettre son repliement dans le renfoncement 32.

Ainsi, lorsque l'écran 14 et le miroir 16 sont repliés dans le fond du renfoncement 32, ceux-ci s'intègrent parfaitement dans la planche de bord 30.

Une solution escamotable de la façon proposée dans la figure 5, ou selon une alternative de réalisation, permet l'activation du viseur HUD seulement dans des moments où celui-ci est utile et l'intégration des éléments permettant la réalité augmentée dans l'habitacle lorsque ceux-ci ne sont pas utilisés.

Avantageusement, un miroir formé de la façon proposée en relation avec la figure 4, comprenant des portions élémentaires de pentes choisies, est relativement compact et compatible avec un volume d'intégration réduit et un encombrement faible.

Des modes de réalisation particuliers de la présente invention ont été décrits. Diverses variantes et modifications apparaîtront à l'homme de l'art. En particulier, le mode de réalisation de la figure 5 d'un dispositif escamotable n'est qu'un exemple. On comprendra que ce dispositif mécanique peut être remplacé par de nombreux autres dispositifs permettant l'intégration de l'écran 14 et du miroir 16 dans la planche de bord.

On notera également que, pour augmenter encore la compacité du dispositif, on pourra prévoir d'utiliser des miroirs plans supplémentaires de façon que le faisceau lumineux issu de l'écran 14 atteigne le miroir 16 après une ou plusieurs réflexions sur des miroirs plans. Cela permet de réduire encore l'espacement entre écran 14 et miroir 16.

On notera en outre que la position verticale de l'écran 14 et du miroir 16 n'est qu'un exemple, et que l'homme de l'art pourra aisément dimensionner et structurer des dispositifs similaires dans lesquels la position de l'écran 14 et du miroir 16 varie par rapport à la verticale du véhicule.

On notera enfin que l'angle d'inclinaison du miroir 16 pour une valeur de distance h donnée, c'est-à-dire dans la largeur du miroir, pourra être constant sur cette largeur, ou varier. Dans ce dernier cas, on pourra prévoir, selon l'axe de profondeur des figures, une structuration similaire à la structuration verticale, en réalisant des calculs selon l'équation (2).

Divers modes de réalisation avec diverses variantes ont été décrits ci-dessus. On notera que l'homme de l'art pourra combiner divers éléments de ces divers modes de réalisation et variantes sans faire preuve d'activité inventive. Notamment, la réalisation de l'écran 14 n'a pas été décrite en détail, le dispositif proposé ici étant compatible avec toute forme de source d'image.

## Revendications

1. Viseur tête haute, comprenant une source d'image (14) et un miroir (16) positionnés selon des plans principaux parallèles et séparés d'une première distance (d), le miroir (16) étant conformé pour former des images virtuelles des images fournies par la source d'image (14) à une deuxième distance (D) du miroir, supérieure à la première distance, le miroir (16) étant constitué d'un empilement de deux couches de même indice (20, 22) séparées par une ligne brisée (24) dont des portions inclinées sont revêtues d'une couche semi-réfléchissante,
dans lequel le miroir (16) comprend des portions élémentaires, l'angle μ de chaque portion élémentaire par rapport au plan principal du miroir (16), en fonction de la distance h entre la projection du centre de ladite portion sur le plan de la source d'image (14) et le centre de la source d'image (14), étant définie par l'équation suivante :

$$\mu(h) = a\cos(\theta)^{f(G)}\left(\arctan\left(\frac{Gd}{h}\right) - \arctan\left(\frac{d}{h}\right)\right),$$

θ étant défini par θ = arctan(h/d), G étant le rapport entre la deuxième (D) et la première distance (d), f(G) étant une valeur négative et non nulle,
et a un paramètre constant.

2. Viseur selon la revendication 1, dans lequel la valeur f(G) déterminée par une étape d'optimisation de tracé de rayons.

3. Viseur selon la revendication 1 ou 2, dans lequel le miroir (16) présente une épaisseur inférieure à 1 cm.

4. Viseur selon l'une quelconque des revendications 1 à 3, dans lequel les portions inclinées ont des pentes qui suivent l'équation μ(h) et sont reliées entre elles par des portions perpendiculaires au plan principal du miroir (16).

5. Viseur selon l'une quelconque des revendications 1 à 4, dans lequel les portions inclinées de la ligne brisée (24) sont métallisées.

6. Viseur selon la revendication 5, dans lequel la métallisation des portions inclinées de la ligne brisée (24) est constituée d'un matériau dont le taux de transmission est supérieur ou égal à 70 %.

7. Viseur selon l'une quelconque des revendications 4 à 6, dans lequel les deux couches de même indice sont recouvertes d'une couche antireflet (26, 28).

8. Planche de bord d'un véhicule, comprenant un viseur tête haute selon l'une quelconque des revendications 1 à 7.

9. Planche de bord selon la revendication 8, dans laquelle la source d'image (14) et le miroir (16) sont escamotables.

10. Planche de bord selon la revendication 8 ou 9, dans lequel la source d'image (14) et le miroir (16) sont montés sur des axes (34, 36) de façon à être repliés dans un renfoncement (32) de la planche de bord (30).

## Patentansprüche

1. Head-up-Display, das eine Bildquelle (14) und einen Spiegel (16) aufweist, die entlang paralleler Hauptebenen positioniert und mit einer ersten Entfernung (d) getrennt sind, wobei der Spiegel (16) so geformt ist, dass er virtuelle Bilder der Bilder erzeugt, die in einer zweiten Entfernung (D) von dem Spiegel, die größer als die erste Entfernung ist, durch die Bildquelle (14) vorgesehen werden, wobei der Spiegel (16) aus einem Stapel von zwei Schichten mit dem gleichen Index (20, 22) gebildet ist, die durch eine unterbrochene Linie (24) getrennt sind, die geneigte Teile aufweist, die mit einem halbreflektierenden Film beschichtet sind,
   wobei der Spiegel (16) grundlegende Teile aufweist, wobei der Winkel μ von jedem grundlegenden Teil in Bezug auf die Hauptebene des Spiegels (16) gemäß der Entfernung h zwischen der Projektion der Mitte des Teils auf der Ebene der Bildquelle (14) und der Mitte der Bildquelle (14) durch die folgende Gleichung definiert wird:

$$\mu(h) = a\cos(\theta)^{f(G)}\left(\arctan\left(\frac{Gd}{h}\right) - \arctan\left(\frac{d}{h}\right)\right)$$

   wobei θ durch θ = arctan(h/d) definiert wird, G das Verhältnis zwischen der zweiten (D) und der ersten Entfernung (d) ist, f(G) ein negativer und Nicht-Null-Wert ist, und a ein konstanter Parameter ist.

2. Anzeige gemäß Anspruch 1, wobei der Wert f(G) durch einen Optimierungsschritt der Strahlenverfolgung bestimmt wird.

3. Anzeige gemäß Anspruch 1, wobei der Spiegel (16) eine Dicke von weniger als 1 cm aufweist.

4. Anzeige gemäß einem der Ansprüche 1 bis 3, wobei die geneigten Teile Neigungen aufweisen, die der Gleichung μ(h) folgen und durch Teile verbunden sind, die senkrecht zu der Hauptebene des Spiegels (16) sind.

5. Anzeige gemäß einem der Ansprüche 1 bis 4, wobei die geneigten Teile der unterbrochenen Linie (24) metallisiert sind.

6. Anzeige gemäß Anspruch 5, wobei die Metallisierung der geneigten Teile der unterbrochenen Linie (24) aus einem Material mit einer Durchlassrate von 70% oder mehr besteht.

7. Anzeige gemäß einem der Ansprüche 4 bis 6, wobei die zwei Schichten des gleichen Index mit einer Antireflexionsschicht (26, 28) bedeckt sind.

8. Fahrzeugarmaturenbrett, das die Anzeige bzw. das Head-up-Display gemäß einem der Ansprüche 1 bis 7 aufweist.

9. Armaturenbrett gemäß Anspruch 8, wobei die Bildquelle (14) und der Spiegel (16) einziehbar bzw. einklappbar sind.

10. Armaturenbrett gemäß Anspruch 8 oder 9, wobei die Bildquelle (14) und der Spiegel (16) auf Achsen (34, 36) zusammengefügt sind, die in eine Ausnehmung (32) des Armaturenbretts (30) eingezogen bzw. eingefaltet werden können.

## Claims

1. A head-up display, comprising an image source (14) and a mirror (16) positioned along parallel main planes and separated by a first distance (d), the mirror (16) being shaped to form virtual images of the images provided by the image source (14) at a second distance (D) from the mirror, greater than the first distance, the mirror (16) being formed of a stack of two layers of same index (20, 22) separated by a broken line (24) having inclined portions coated with a semi-reflective film,
wherein the mirror (16) comprises elementary portions, angle $\mu$ of each elementary portion with respect to the main plane of the mirror (16), according to distance h between the projection of the center of said portion on the plane of the image source (14) and the center of the image source (14), being defined by the following equation:

$$\mu(h) = a\cos(\theta)^{f(G)}\left(\arctan\left(\frac{Gd}{h}\right) - \arctan\left(\frac{d}{h}\right)\right),$$

$\theta$ being defined by $\theta = \arctan(h/d)$, G being the ratio between the second (D) and the first distance (d), f(G) being a negative and not zero value, and a being a constant parameter.

2. The display of claim 1, wherein value f(G) is determined by a ray tracing optimization step.

3. The display of claim 1, wherein the mirror (16) has a thickness lower than 1 cm.

4. The display of any of claims 1 to 3, wherein the inclined portions have slopes following equation $\mu$(h) and are interconnected by portions perpendicular to the main plane of the mirror (16).

5. The display of any of claims 1 to 4, wherein the inclined portions of the broken line (24) are metallized.

6. The display of claim 5, wherein the metallization of the inclined portions of the broken line (24) is made of a material having a transmission rate greater than or equal to 70%.

7. The display of any of claims 4 to 6, wherein the two layers of same index are covered with an antireflection layer (26, 28).

8. A vehicle dashboard, comprising the head-up display of any of claims 1 to 7.

9. The dashboard of claim 8, wherein the image source (14) and the mirror (16) are retractable.

10. The dashboard of claim 8 or 9, wherein the image source (14) and the mirror (16) are assembled on axes (34, 36) to be folded in a recess (32) of the dashboard (30).

Fig 1

Fig 2

Fig 3

**Fig 4**

**Fig 5**